(19) Europäisches Patentamt
European Patent Office
Office européen des brevets

(11) **EP 3 485 296 B1**

(12) **EUROPÄISCHE PATENTSCHRIFT**

(45) Veröffentlichungstag und Bekanntmachung des Hinweises auf die Patenterteilung:
**16.09.2020 Patentblatt 2020/38**

(21) Anmeldenummer: **17740613.9**

(22) Anmeldetag: **27.06.2017**

(51) Int Cl.:
***G01S 19/42*** *(2010.01)*

(86) Internationale Anmeldenummer:
**PCT/DE2017/200058**

(87) Internationale Veröffentlichungsnummer:
**WO 2018/010739 (18.01.2018 Gazette 2018/03)**

(54) **VERFAHREN ZUM BESTIMMEN EINER POSITION, STEUERUNGSMODUL UND SPEICHERMEDIUM**

METHOD FOR DETERMINING A POSITION, CONTROL MODULE AND STORAGE MEDIUM

PROCÉDÉ DE DÉTERMINATION D'UNE POSITION, MODULE DE COMMANDE ET SUPPORT D'ENREGISTREMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2016 DE 102016212919**

(43) Veröffentlichungstag der Anmeldung:
**22.05.2019 Patentblatt 2019/21**

(73) Patentinhaber: **Continental Automotive GmbH 30165 Hannover (DE)**

(72) Erfinder:
• **AZARKEVICH, Sergey 93055 Regensburg (DE)**
• **FAISST, Holger 93161 Sinzing (DE)**

(74) Vertreter: **Wagner, Philipp Conti Temic microelectronic GmbH Intellectual Property Sieboldstraße 19 90411 Nürnberg (DE)**

(56) Entgegenhaltungen:
**US-A1- 2003 162 552     US-A1- 2006 229 805**
**US-A1- 2009 119 015     US-A1- 2012 293 366**

• **CHEN HUNG-WEI ET AL: "A new coarse-time GPS positioning algorithm using combined Doppler and code-phase measurements", GPS (CONFERENCE ON OUTDOOR ADVERTISING RESEARCH), SPRINGER, ZÜRICH, Bd. 18, Nr. 4, 31. Oktober 2013 (2013-10-31), Seiten 541-551, XP035389802, ISSN: 1080-5370, DOI: 10.1007/S10291-013-0350-8 [gefunden am 2013-10-31]**

**Beschreibung**

Die Erfindung betrifft ein Verfahren zum Bestimmen einer Position einer Einheit, insbesondere eines Fahrzeugs. Die Erfindung betrifft des Weiteren ein zugehöriges Steuerungsmodul sowie ein zugehöriges Speichermedium.

Die Bestimmung einer genauen Position auf der Erdoberfläche wird für Fahrzeuge immer wichtiger. Als Beispiel sind Fahrzeug-zu-X-Kommunikation und autonomes Fahren zu nennen, wobei in solchen Fällen typischerweise nicht mehr nur noch ein grober Standort des Fahrzeugs wie für Navigationszwecke erforderlich ist, sondern auch eine genaue Lokalisierung des Fahrzeugs auf der Straße, beispielsweise also eine Zuordnung zu einer bestimmten Fahrspur.

US 2003/162552 A1 offenbart ein Verfahren zum Bestimmen einer Position einer Einheit, wobei Delta-Entfernungen, Satellitengeschwindigkeiten und Positionen für mindestens vier GPS Satelliten benutzt werden, um einen Uhrenfehler und die Position der Einheit herauszufinden.

Gemäß dem Stand der Technik wird die Position eines Fahrzeugs typischerweise mittels Satellitennavigation bestimmt, wobei hierbei die als Single Point Positioning (SPP) bekannte Vorgehensweise angewandt wird. Basierend auf einer Laufzeitmessung kommt dabei folgende Formel (1) zum Einsatz:

$$\rho^m = \sqrt{(x - x^m)^2 + (y - y^m)^2 + (z - z^m)^2} + c\delta t_r \qquad (1)$$

Dabei bedeuten:

- m ein Index eines jeweiligen Satelliten,
- $\rho^m$ ein Laufzeitwert oder ein aus einem Laufzeitwert berechneter Wert,
- *x, y, z* Komponenten der vektoriellen Position der Einheit bzw. des Fahrzeugs,
- $x^m$, $y^m$, $z^m$ Komponenten der vektoriellen Position des Satelliten mit Index m,
- c die Lichtgeschwindigkeit, und
- $\delta t_r$ ein Uhrenfehler der Einheit.

Für eine solche Positionsbestimmung sind typischerweise vier Messungen basierend auf vier Satelliten vonnöten.

Soll auch eine Geschwindigkeit bestimmt werden, so kann auf ein Verfahren zurückgegriffen werden, welches als Single Point Velocity (SPV) bekannt ist und auf Dopplermessungen basiert. Dabei wird insbesondere folgende Formel (2) verwendet:

$$\dot{\rho}^m = \frac{[(x - x^m)(y - y^m)(z - z^m)]}{\sqrt{(x - x^m)^2 + (y - y^m)^2 + (z - z^m)^2}} \begin{bmatrix} (v_x - v_x^m) \\ (v_y - v_y^m) \\ (v_z - v_z^m) \end{bmatrix} + c\delta\dot{t}_r \qquad (2)$$

Dabei bedeuten:

- m ein Index eines jeweiligen Satelliten,
- $\dot{\rho}^m$ ein Dopplerwert oder ein aus einem Dopplerwert berechneter Wert,
- *x, y,* z Komponenten der vektoriellen Position der Einheit bzw. des Fahrzeugs,
- $x^m$, $y^m$, $z^m$ Komponenten der vektoriellen Position des Satelliten mit Index *m,*
- $v_x$, $v_y$, $v_z$ Komponenten der vektoriellen Geschwindigkeit der Einheit,
- $V_x^m$, $V_y^m$, $V_z^m$ Komponenten der vektoriellen Geschwindigkeit des Satelliten mit Index *m,*
- c die Lichtgeschwindigkeit, und
- $\delta\dot{t}_r$ eine Ableitung eines Uhrenfehlers der Einheit.

Hierbei werden also Dopplermessungen verwendet, welche auf den von den Satelliten empfangenen Signalen basieren, um die Geschwindigkeit zu bestimmen. Allerdings geht hierbei auch die mittels SPP ermittelte Position der Einheit ein. In nachfolgenden Datenfusionsblöcken, beispielsweise mit Daten, welche aus Inertialsensoren erhalten werden, können somit die mittels SPP ermittelte Position und die mittels SPV ermittelte Geschwindigkeit nicht als unkorreliert betrachtet werden. Dies liegt insbesondere daran, dass die SPV-Geschwindigkeit von der SPP-Position abhängt, beispielsweise in Bezug auf Ionosphärenfehler oder Mehrpfadeffekte. Dies begrenzt den Sicherheitslevel und die Performance (insbesondere Genauigkeit und Verfügbarkeit des Ausgangs des Fusionsfilters).

Es ist deshalb eine Aufgabe der Erfindung, ein Verfahren zum Bestimmen einer Position einer Einheit vorzusehen, welches im Vergleich zu aus dem Stand der Technik bekannten Verfahren verbessert ist. Es ist des Weiteren eine Aufgabe der Erfindung, ein Steuerungsmodul, insbesondere ein Satellitennavigationsmodul, vorzusehen, welches dazu konfiguriert ist, ein solches Verfahren auszuführen. Außerdem ist es eine Aufgabe der Erfindung, ein nichtflüchtiges computerlesbares Speichermedium vorzusehen, welches Programmcode enthält, bei dessen Ausführung ein Prozessor ein solches Verfahren ausführt.

Dies wird erfindungsgemäß durch ein Verfahren nach Anspruch 1, durch ein Steuerungsmodul nach Anspruch 14 und ein Speichermedium nach Anspruch 15 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Bestimmen einer Position einer Einheit mittels Satellitennavigation. Bei der Einheit kann es sich insbesondere um ein Fahrzeug bzw. um ein Kraftfahrzeug handeln. Das Verfahren weist folgende Schritte auf:

- Empfangen einer Mehrzahl von Satellitensignalen, nämlich zumindest

  - eines ersten Satellitensignals,
  - eines zweiten Satellitensignals,
  - eines dritten Satellitensignals, und
  - eines vierten Satellitensignals,

- Durchführen einer Mehrzahl von Dopplermessungen an den Satellitensignalen, dabei Erzeugung
- eines ersten Dopplerwerts basierend auf dem ersten Satellitensignal,
- eines zweiten Dopplerwerts basierend auf dem zweiten Satellitensignal,
- eines dritten Dopplerwerts basierend auf dem dritten Satellitensignal, und
- eines vierten Dopplerwerts basierend auf dem vierten Satellitensignal,
- Berechnen der Position basierend auf dem ersten Dopplerwert, dem zweiten Dopplerwert, dem dritten Dopplerwert und dem vierten Dopplerwert, wobei die Position eine Variable der Berechnung ist.

Das Verfahren basiert auf der Erkenntnis der Erfinder der vorliegenden Anmeldung, dass zur Bestimmung der Position eines Fahrzeugs nicht zwingend Laufzeitmessungen verwendet werden müssen, sondern vielmehr Dopplermessungen ausreichen. Es werden weiter unten weitere Ausführungen und Beispiele dazu gegeben werden, wie dies genau funktionieren kann. Damit ist eine grundsätzliche Abkehr von aus dem Stand der Technik bekannten Verfahren bei der Durchführung von Satellitennavigation verbunden, da bei Verfahren nach dem Stand der Technik grundsätzlich zunächst die Position basierend auf Laufzeitmessungen bestimmt wird.

Die Position kann bei dem erfindungsgemäßen Verfahren gerade unabhängig von Laufzeitmessungen bestimmt werden, so dass die oben beschriebenen Probleme mit der Korrelation zwischen Position und Geschwindigkeit und der Fehlerfortpflanzung nicht auftreten.

Bevorzugt werden alle Satellitensignale von jeweils unterschiedlichen Satelliten empfangen. Dies bedeutet insbesondere, dass jedes Satellitensignal einem jeweiligen Satelliten zugeordnet ist, und dass diesen Satelliten kein anderes Satellitensignal zugeordnet ist. Damit kann die Genauigkeit erhöht werden.

Die Position wird insbesondere unabhängig von Lauf Zeitmessungen berechnet. Dies kann insbesondere bedeuten, dass keine aus Laufzeitmessungen bestimmte Position in die Berechnung eingeht.

Gemäß einer Weiterbildung wird beim Schritt des Berechnens ferner eine Ableitung eines Uhrenfehlers der Einheit basierend auf den zur Berechnung der Position verwendeten Dopplerwerten berechnet, wobei die Ableitung eines Uhrenfehlers eine Variable der Berechnung ist. Damit kann zusätzlich zur Position auch noch eine Ableitung des Uhrenfehlers berechnet werden, welche beispielsweise für andere Berechnungsschritte oder andere Anwendungen erforderlich sein kann.

Gemäß einer Ausführung wird das Verfahren bei auf der Erdoberfläche feststehender Einheit ausgeführt. Das Feststehen der Einheit kann dabei beispielsweise durch Odometrie, insbesondere mittels einer Kamera, oder auch durch andere Sensorik, beispielsweise durch Raddrehzahlsensoren, Radarsensoren oder Inertialsensoren (IMU) erkannt werden. Auch Kombinationen davon sind möglich.

Bei auf der Erdoberfläche feststehender Einheit sind insbesondere keine Geschwindigkeiten als Variablen in der Berechnung erforderlich, da diese als null angenommen werden können. Dies vereinfacht die Berechnung und kann die Anzahl der benötigten Satelliten zur Durchführung des Verfahrens verringern.

Es sei verstanden, dass die hierin beschriebenen Ausführungsformen für eine auf der Erdoberfläche feststehende Einheit und für eine bewegte Einheit insbesondere auch miteinander kombiniert werden können, so dass beispielsweise beide Ausführungen in einem Steuerungsmodul oder einer Software implementiert sind. Je nachdem, ob sich die Einheit gerade bewegt oder nicht, können dabei unterschiedliche Ausführungen ausgeführt werden.

Gemäß einer Ausführung wird beim Schritt des Empfangens ferner

- ein fünftes Satellitensignal,
- ein sechstes Satellitensignal, und
- ein siebtes Satellitensignal

empfangen.

Beim Schritt des Durchführens einer Mehrzahl von Dopplermessungen werden dabei ferner

- ein fünfter Dopplerwert basierend auf dem fünften Satellitensignal,
- ein sechster Dopplerwert basierend auf dem sechsten Satellitensignal und
- ein siebter Dopplerwert basierend auf dem siebten Satellitensignal

erzeugt.

Beim Schritt des Berechnens wird dabei die Position auch basierend auf dem fünften Dopplerwert, dem sechsten Dopplerwert und dem siebten Dopplerwert berechnet, wobei die Position und Komponenten eines Geschwindigkeitsvektors der Einheit Variablen der Berechnung sind.

Gerade in diesem Fall werden also sieben Satelliten bzw. sieben Satellitensignale verwendet, so dass die Position gemäß dem erfindungsgemäßen Verfahren im allgemeinen Fall einer auf der Erdoberfläche bewegten Einheit berechnet werden kann, in welchem die drei Vektorkomponenten des Geschwindigkeitsvektors der Einheit auf der Erdoberfläche Variablen der Berechnung sind.

Bei den Dopplerwerten handelt es sich typischerweise um Werte, welche eine basierend auf Dopplermessungen ermittelte Geschwindigkeit anzeigen.

Es sei verstanden, dass bei auf der Erdoberfläche feststehendem Fahrzeug typischerweise vier Satelliten bzw. vier Satellitensignale ausreichen.

Das Verfahren wird gemäß einer Ausführung bei auf der Erdoberfläche bewegter Einheit ausgeführt. Dies kann beispielsweise wie eben beschrieben erfolgen.

Die Berechnung der Position kann beispielsweise basierend auf der Formel

$$\dot{\rho}^m = \frac{\left[(x - x^m)(y - y^m)(z - z^m)\right]}{\sqrt{(x - x^m)^2 + (y - y^m)^2 + (z - z^m)^2}} \begin{bmatrix} (v_x - v_x^m) \\ (v_y - v_y^m) \\ (v_z - v_z^m) \end{bmatrix} + c\delta\dot{t}_r \qquad (2)$$

oder einer Linearisierung davon durchgeführt werden, wobei

- m ein Index eines jeweiligen Satelliten ist,
- $\dot{\rho}^m$ ein Dopplerwert oder ein aus einem Dopplerwert berechneter Wert ist,
- x, y, z Komponenten der vektoriellen Position der Einheit sind,
- $x^m$, $y^m$, $z^m$ Komponenten der vektoriellen Position des Satelliten mit Index m sind,
- $v_x$, $v_y$, $v_z$ Komponenten der vektoriellen Geschwindigkeit der Einheit sind,
- $v_x^m$, $v_y^m$, $v_z^m$ Komponenten der vektoriellen Geschwindigkeit des Satelliten mit Index m sind,
- c die Lichtgeschwindigkeit ist, und
- $\delta\dot{t}_r$ eine Ableitung eines Uhrenfehlers der Einheit ist.

Somit kann auf die bekannte Formel zurückgegriffen werden, welche hier jedoch in der Form verwendet wird, dass Position und Geschwindigkeit nicht auf Laufzeitmessungen, sondern vielmehr auf Dopplermessungen basieren.

Es sei verstanden, dass in dieser Formel im Fall einer auf der Erdoberfläche feststehenden Einheit insbesondere die Komponenten der vektoriellen Geschwindigkeit, also $v_x$, $v_y$, $v_z$, jeweils gleich null gesetzt werden können.

Gemäß einer Weiterbildung wird beim Schritt des Empfangens ferner ein weiteres Satellitennavigationssignal empfangen, und das Verfahren weist ferner folgende Schritte auf:

- Durchführen einer Laufzeitmessung basierend auf dem weiteren Satellitennavigationssignal, dabei Erzeugen eines Laufzeitwerts, und
- Berechnen eines Uhrenfehlers der Einheit basierend auf der Position und dem Laufzeitwert.

Damit kann das Verfahren auch zur Berechnung des Uhrenfehlers verwendet werden, welcher beispielsweise für andere Anwendungen erforderlich sein kann.

Der Uhrenfehler kann insbesondere basierend auf der Formel

$$\rho^m = \sqrt{\left(x - x^m\right)^2 + \left(y - y^m\right)^2 + \left(z - z^m\right)^2} + c\delta t_r \qquad (1)$$

oder einer Linearisierung davon berechnet werden, wobei

- m ein Index eines jeweiligen Satelliten ist,
- $\rho^m$ ein Laufzeitwert oder ein aus einem Laufzeitwert berechneter Wert ist,
- x, y, z Komponenten der vektoriellen Position der Einheit sind,
- $x^m$, $y^m$, $z^m$ Komponenten der vektoriellen Position des Satelliten mit Index m sind,
- c die Lichtgeschwindigkeit ist, und
- $\delta t_r$ ein Uhrenfehler der Einheit ist.

Auch hier kann also auf die bekannte Formel zurückgegriffen werden.

Das Verfahren wird bevorzugt unter Verwendung eines erdzentrierten und erdfesten Koordinatensystems ausgeführt. Dies bedeutet, dass eine auf der Erdoberfläche feststehende Einheit eine Geschwindigkeit von null hat. Auch die Positionen und Geschwindigkeiten der Satelliten werden bevorzugt in diesem Koordinatensystem angegeben, wobei diese Positionen und Geschwindigkeiten typischerweise bekannt sind bzw. über diverse Almanachdaten und Ephemeridendaten an Satellitennavigationsmodule oder andere Satellitensignale verwertende Einheiten gesendet werden.

Bei der Einheit kann es sich insbesondere um ein Kraftfahrzeug handeln. Grundsätzlich ist das Verfahren aber auch bei anderen Einheiten wie beispielsweise einem Mobiltelefon, einem tragbaren Satellitennavigationsgerät, einem Wasserfahrzeug oder einem Luftfahrzeug anwendbar.

Die Erfindung betrifft des Weiteren ein Steuerungsmodul, insbesondere ein Satellitennavigationsmodul, welches dazu konfiguriert ist, ein Verfahren gemäß der Erfindung auszuführen. Des Weiteren betrifft die Erfindung ein nichtflüchtiges computerlesbares Speichermedium, welches Programmcode enthält, bei dessen Ausführung ein Prozessor ein Verfahren gemäß der Erfindung ausführt. Hinsichtlich des erfindungsgemäßen Verfahrens kann dabei grundsätzlich auf alle beschriebenen Ausführungen und Varianten zurückgegriffen werden.

Nachfolgend werden gewisse Aspekte oder Ideen der Erfindung separat beschrieben, wobei die nachfolgend erwähnten Aspekte und Ideen grundsätzlich untereinander und auch mit allen anderen Offenbarungen dieser Anmeldung in beliebiger Weise kombiniert werden können. Sie können jedoch auch eigenständige Erfindungsaspekte sein.

Gemäß einer ersten Idee kann eine Position der Einheit bzw. eine Antennenposition nur auf Dopplermessungen erfolgen.

In Ruhe, also wenn $v_x$=0, $v_y$=0, $v_z$=0 gilt, was insbesondere durch Odometrie oder andere Sensorik erkannt werden kann, kann die Positionslösung x, y, z, $\delta t_r$ durch die oben erwähnte Gleichung (2) oder eine Linearisierung davon erhalten werden, wobei typischerweise zumindest vier Dopplermessungen verwendet werden können.

In allgemeinen Situationen, also wenn $v_x$≠0, $v_y$≠0, $v_z$≠0 gilt oder zumindest damit zu rechnen ist, kann die Positionslösung (und Geschwindigkeitslösung) x, y, z, $v_x$, $v_y$, $v_z$, $\delta t_r$ durch die oben erwähnte Gleichung (2) oder eine Linearisierung davon erhalten werden. Dabei können typischerweise zumindest sieben Dopplermessungen verwendet werden.

Gemäß einer weiteren Idee kann die Position basierend auf einer Mischung von Laufzeitmessung und Dopplermessungen erhalten werden.

In Ruhe, d.h. wenn $v_x$=0, $v_y$=0, $v_z$=0 gilt, was insbesondere durch Odometrie und/oder andere Sensorik erkannt werden kann, kann die Positionslösung x, y, z, $\delta t_r$, $\delta \dot{t}_r$ durch die oben erwähnten Gleichungen (1) und (2) oder eine jeweilige Linearisierung davon unter Verwendung von typischerweise mindestens fünf Messungen erhalten werden. Die Messungen sind dabei sowohl Laufzeitmessungen wie auch Dopplermessungen.

Im allgemeinen Fall, d.h. wenn $v_x$≠0, $v_y$≠0, $v_z$≠0 gilt, kann die Positionslösung (und Geschwindigkeitslösung) x, y, z, $v_x$, $v_y$, $v_z$, $\delta t_r$, $\delta \dot{t}_r$ mittels den Gleichungen (1) und (2) oder einer Linearisierung davon unter Verwendung von typischerweise zumindest acht Messungen erhalten werden. Bei den Messungen handelt es sich dabei wiederum sowohl um Laufzeitmessungen wie auch um Dopplermessungen.

Als Vorteile des erfindungsgemäßen Verfahrens können insbesondere die folgenden Punkte angegeben werden:

- Dopplermessungen werden weniger durch Ionosphäreneffekte und Multipfadeffekte beeinflusst.
- Es werden unabhängige Lösungen sowohl für die Position wie auch für die Geschwindigkeit vorgesehen, so dass es keine Kreuzkorrelation zwischen laufzeitbasierten Lösungen und Doppler-basierten Lösungen, keine Fehlerfortpflanzung und höhere Genauigkeit bei der Datenfusion gibt.
- Es kann eine Überprüfung zwischen SPP und SPV durchgeführt werden, was den Sicherheitslevel, insbesondere bei der Datenfusion, weiter erhöht.
- Bei Stillstand der Einheit bzw. des Fahrzeugs werden weniger Satelliten zur Positionsbestimmung benötigt.

Weitere Merkmale und Vorteile wird der Fachmann dem nachfolgend mit Bezug auf die beigefügte Zeichnung beschriebenen Ausführungsbeispiel entnehmen. Dabei zeigt:

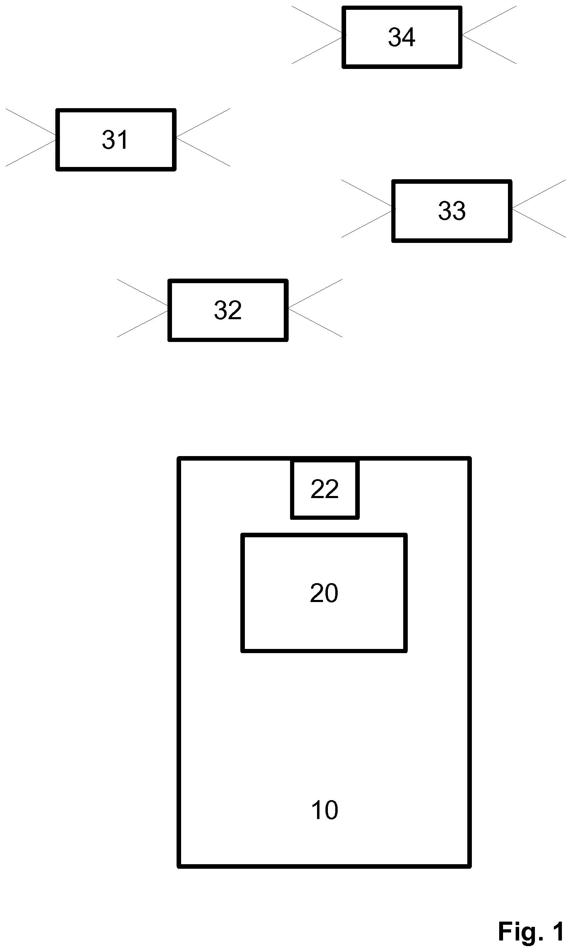

Fig. 1: eine Anordnung zur Durchführung des erfindungsgemäßen Verfahrens.

Fig. 1 zeigt ein Fahrzeug 10, welches hier lediglich schematisch dargestellt ist. Das Fahrzeug 10 ist grundsätzlich dazu ausgebildet, sich auf der Erdoberfläche zu bewegen. Hierauf wird hier jedoch nicht weiter eingegangen.

Das Fahrzeug 10 weist ein Satellitennavigationsmodul 20 auf. Hierbei handelt es sich um ein elektronisches Steuerungsmodul, welches Prozessormittel und Speichermittel enthält, wobei in den Speichermitteln Programmcode gespeichert ist, bei dessen Ausführung die Prozessormittel ein erfindungsgemäßes Verfahren ausführen.

Das Fahrzeug 10 weist ferner eine Kamera 22 auf, welche dazu ausgebildet ist, durch Odometrie zu erkennen, ob das Fahrzeug 10 gerade steht oder sich bewegt. Bezugssystem ist dabei die Erdoberfläche, welche von der Kamera 22 gesehen werden kann.

Des Weiteren sind in Fig. 1 vier Satelliten dargestellt, nämlich ein erster Satellit 31, ein zweiter Satellit 32, ein dritter Satellit 33 und ein vierter Satellit 34. Die Satelliten 31, 32, 33, 34 senden Satellitensignale aus, welche von dem Fahrzeug 10 bzw. dessen Satellitennavigationsmodul 20 empfangen werden. Geschwindigkeiten und Positionen der Satelliten 31, 32, 33, 34 sind dabei dem Satellitennavigationsmodul 20 bekannt, insbesondere über gesendete Ephemeridendaten und Almanachdaten.

In Fig. 1 ist beispielhaft die Situation dargestellt, in welcher das Fahrzeug 10 steht und somit vier Satelliten zur Positionsbestimmung gemäß dem bestimmungsgemäßen Verfahren ausreichend sind. Es sei verstanden, dass im allgemeinen Fall typischerweise sieben Satelliten zur Positionsbestimmung gemäß dem erfindungsgemäßen Verfahren verwendet werden.

Wenn somit die Kamera 22 erkennt, dass sich das Fahrzeug 10 nicht auf der Erdoberfläche bewegt, so ermittelt das Satellitennavigationsmodul 20 aus empfangenen Satellitensignalen der vier Satelliten 31, 32, 33, 34 durch Dopplermessungen jeweilige Dopplerwerte. Die Dopplerwerte werden dann verwendet, um ohne Beteiligung von Laufzeitmessungen die Position des Fahrzeugs 10 zu bestimmen. Dies kann insbesondere wie weiter oben beschrieben erfolgen. Auf eine Wiederholung wird an dieser Stelle verzichtet, vielmehr sei auf die obigen Ausführungen verwiesen.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

**Patentansprüche**

1. Verfahren zum Bestimmen einer Position einer Einheit (10) mittels Satellitennavigation, wobei das Verfahren folgende Schritte aufweist:

   - Empfangen einer Mehrzahl von Satellitensignalen, nämlich zumindest

      - eines ersten Satellitensignals,
      - eines zweiten Satellitensignals,
      - eines dritten Satellitensignals, und
      - eines vierten Satellitensignals,

   - Durchführen einer Mehrzahl von Dopplermessungen an den Satellitensignalen, dabei Erzeugung
   - eines ersten Dopplerwerts basierend auf dem ersten Satellitensignal,
   - eines zweiten Dopplerwerts basierend auf dem zweiten Satellitensignal,
   - eines dritten Dopplerwerts basierend auf dem dritten Satellitensignal, und
   - eines vierten Dopplerwerts basierend auf dem vierten Satellitensignal,
   - Berechnen der Position basierend auf dem ersten Dopplerwert, dem zweiten Dopplerwert, dem dritten Dopplerwert und dem vierten Dopplerwert, wobei die Position eine Variable der Berechnung ist,
   - wobei beim Schritt des Empfangens ferner ein weiteres Satellitennavigationssignal empfangen wird, und
   - wobei das Verfahren ferner folgende Schritte aufweist:
   - Durchführen einer Laufzeitmessung basierend auf dem weiteren Satellitennavigationssignal, dabei Erzeugung eines Laufzeitwerts, und
   - Berechnen eines Uhrenfehlers der Einheit (10) basierend auf der Position und dem Laufzeitwert.

2. Verfahren nach Anspruch 1,

   - wobei alle Satellitensignale von jeweils unterschiedlichen Satelliten (31, 32, 33, 34) empfangen werden.

3. Verfahren nach einem der vorhergehenden Ansprüche,

   - wobei die Position unabhängig von Laufzeitmessungen berechnet wird.

4. Verfahren nach einem der vorhergehenden Ansprüche,

   - wobei beim Schritt des Berechnens ferner eine Ableitung eines Uhrenfehlers der Einheit (10) basierend auf den zur Berechnung der Position verwendeten Dopplerwerten berechnet wird, wobei die Ableitung eines Uhrenfehlers eine Variable der Berechnung ist.

5. Verfahren nach einem der vorhergehenden Ansprüche,

   - welches bei auf der Erdoberfläche feststehender Einheit (10) ausgeführt wird.

6. Verfahren nach Anspruch 5,

   - wobei das Feststehen der Einheit (10) auf der Erdoberfläche durch Odometrie erkannt wird.

7. Verfahren nach einem der Ansprüche 1 bis 4,

   - wobei beim Schritt des Empfangens ferner

      - ein fünftes Satellitensignal,
      - ein sechstes Satellitensignal, und

- ein siebtes Satellitensignal

empfangen werden,
- wobei beim Schritt des Durchführens einer Mehrzahl von Dopplermessungen ferner
- ein fünfter Dopplerwert basierend auf dem fünften Satellitensignal,
- ein sechster Dopplerwert basierend auf dem sechsten Satellitensignal, und
- ein siebter Dopplerwert basierend auf dem siebten Satellitensignal

erzeugt werden, und

- wobei beim Schritt des Berechnens die Position auch basierend auf dem fünften Dopplerwert, dem sechsten Dopplerwert und dem siebten Dopplerwert berechnet wird, wobei die Position und Komponenten eines Geschwindigkeitsvektors der Einheit (10) Variablen der Berechnung sind.

8. Verfahren nach Anspruch 7,

- welches bei sich auf der Erdoberfläche bewegender Einheit (10) ausgeführt wird.

9. Verfahren nach einem der vorhergehenden Ansprüche,

- wobei die Berechnung der Position basierend auf der Formel

$$
\dot{\rho}^m = \frac{\left[\left(x - x^m\right)\left(y - y^m\right)\left(z - z^m\right)\right]}{\sqrt{\left(x - x^m\right)^2 + \left(y - y^m\right)^2 + \left(z - z^m\right)^2}} \begin{bmatrix} \left(v_x - v_x^m\right) \\ \left(v_y - v_y^m\right) \\ \left(v_z - v_z^m\right) \end{bmatrix} + c\dot{\delta t_r}
$$

oder einer Linearisierung davon durchgeführt wird, wobei
- $m$ ein Index eines jeweiligen Satelliten ist,
- $\dot{\rho}^m$ ein Dopplerwert oder ein aus einem Dopplerwert berechneter Wert ist,
- $x$, $y$, $z$ Komponenten der vektoriellen Position der Einheit sind,
- $x^m$, $y^m$, $z^m$ Komponenten der vektoriellen Position des Satelliten mit Index m sind,
- $v_x$, $v_y$, $v_z$ Komponenten der vektoriellen Geschwindigkeit der Einheit sind,
- $v_x^m$, $v_y^m$, $v_z^m$ Komponenten der vektoriellen Geschwindigkeit des Satelliten mit Index $m$ sind,
- c die Lichtgeschwindigkeit ist, und
- $\dot{\delta t_r}$ eine Ableitung eines Uhrenfehlers der Einheit ist.

10. Verfahren nach einem der vorhergehenden Ansprüche,

- wobei die Berechnung des Uhrenfehlers basierend auf der Formel

$$
\rho^m = \sqrt{\left(x - x^m\right)^2 + \left(y - y^m\right)^2 + \left(z - z^m\right)^2} + c\delta t_r
$$

oder einer Linearisierung davon durchgeführt wird, wobei
- m ein Index eines jeweiligen Satelliten ist,
- $\rho^m$ ein Laufzeitwert oder ein aus einem Laufzeitwert berechneter Wert ist,
- $x$, $y$, $z$ Komponenten der vektoriellen Position der Einheit sind,
- $x^m$, $y^m$, $z^m$ Komponenten der vektoriellen Position des Satelliten mit Index m sind,
- c die Lichtgeschwindigkeit ist, und
- $\delta t_r$ ein Uhrenfehler der Einheit ist.

11. Verfahren nach einem der vorhergehenden Ansprüche,

- welches unter Verwendung eines erdzentrierten und erdfesten Koordinatensystems ausgeführt wird.

**12.** Verfahren nach einem der vorhergehenden Ansprüche,

- wobei die Einheit (10) ein Kraftfahrzeug ist.

**13.** Satellitennavigationsmodul, welches dazu konfiguriert ist ein Verfahren nach einem der vorhergehenden Ansprüche auszuführen.

**14.** Nichtflüchtiges computerlesbares Speichermedium, welches Programmcode enthält, bei dessen Ausführung das Satellitennavigationsmodul des Anspruchs 13 ein Verfahren nach einem der Ansprüche 1 bis 12 ausführt.

**Claims**

**1.** Method for determining a position of a unit (10) by means of satellite navigation, wherein the method includes the following steps:

- receiving a plurality of satellite signals, namely at least

- a first satellite signal,
- a second satellite signal,
- a third satellite signal, and
- a fourth satellite signal,

- performing a plurality of Doppler measurements on the satellite signals, in the process producing
- a first Doppler value on the basis of the first satellite signal,
- a second Doppler value on the basis of the second satellite signal,
- a third Doppler value on the basis of the third satellite signal, and
- a fourth Doppler value on the basis of the fourth satellite signal,
- calculating the position on the basis of the first Doppler value, the second Doppler value, the third Doppler value and the fourth Doppler value, wherein the position is a variable of the calculation,
- wherein, further, during the reception step, a further satellite navigation signal is received and
- wherein the method further includes the following steps:
- performing a time-of-flight measurement on the basis of the further satellite navigation signal, producing a time-of-flight value in the process, and
- calculating a clock error of the unit (10) on the basis of the position and the time-of-flight value.

**2.** Method according to Claim 1,

- wherein all satellite signals are received from different satellites (31, 32, 33, 34) in each case.

**3.** Method according to any one of the preceding claims,

- wherein the position is calculated independently of time-of-flight measurements.

**4.** Method according to any one of the preceding claims,

- wherein, further, a derivative of a clock error of the unit (10) is calculated during the calculation step on the basis of the Doppler values used for calculating the position, wherein the derivative of a clock error is a variable of the calculation.

**5.** Method according to any one of the preceding claims,

- which is carried out when the unit (10) is stationary on the Earth's surface.

**6.** Method according to Claim 5,

- wherein the stationary state of the unit (10) on the Earth's surface is identified by odometry.

7. Method according to any one of Claims 1 to 4,

   - wherein, further, during the reception step,

      - a fifth satellite signal,
      - a sixth satellite signal, and
      - a seventh satellite signal

   are received,
   - wherein, further, during the step of performing a plurality of Doppler measurements,
   - a fifth Doppler value is produced on the basis of the fifth satellite signal,
   - a sixth Doppler value is produced on the basis of the sixth satellite signal,
   - a seventh Doppler value is produced on the basis of the seventh satellite signal,
   and
   - wherein, during the calculation step, the position is also calculated on the basis of the fifth Doppler value, the sixth Doppler value and the seventh Doppler value, wherein the position and components of a velocity vector of the unit (10) are variables of the calculation.

8. Method according to Claim 7,

   - which is carried out when the unit (10) is moving on the Earth's surface.

9. Method according to any one of the preceding claims,

   - wherein the calculation of the position is performed on the basis of the following formula:

$$\dot{\rho}^m = \frac{\left[\left(x - x^m\right)\left(y - y^m\right)\left(z - z^m\right)\right]}{\sqrt{\left(x - x^m\right)^2 + \left(y - y^m\right)^2 + \left(z - z^m\right)^2}} \begin{bmatrix} \left(v_x - v_x^m\right) \\ \left(v_y - v_y^m\right) \\ \left(v_z - v_z^m\right) \end{bmatrix} + c\delta\dot{t}_r$$

   or a linearization thereof,
   where
   - m is an index of a respective satellite,
   - $\dot{\rho}^m$ is a Doppler value or a value calculated from a Doppler value,
   - x, y, z are components of the vector position of the unit,
   - $x^m$, $y^m$, $z^m$ are components of the vector position of the satellite with index m,
   - $v_x$, $v_y$, $v_z$ are components of the vector velocity of the unit,
   - $V_x^m$, $V_y^m$, $V_z^m$ are components of the vector velocity of the satellite with index m,
   - c is the speed of light, and
   - $\delta\dot{t}_r$ is a derivative of a clock error of the unit.

10. Method according to any one of the preceding claims,

   - wherein the calculation of the clock error is performed on the basis of the following formula:

$$\rho^m = \sqrt{\left(x - x^m\right)^2 + \left(y - y^m\right)^2 + \left(z - z^m\right)^2} + c\delta t_r$$

   or a linearization thereof,
   where
   - m is an index of a respective satellite,
   - $\rho^m$ is a time-of-flight value or a value calculated from a time-of-flight value,

- $x, y, z$ are components of the vector position of the unit, m
- $x^m, y^m, z^m$ are components of the vector position of the satellite with index m,
- c is the speed of light, and
- $\delta t_r$ is a clock error of the unit.

**11.** Method according to any one of the preceding claims,

- which is carried out using a terrestrially centred and terrestrially fixed coordinate system.

**12.** Method according to any one of the preceding claims,

- wherein the unit (10) is a motor vehicle.

**13.** Satellite navigation module configured to carry out a method according to any one of the preceding claims.

**14.** Non-volatile, computer-readable data storage medium, containing program code which, when carried out, causes the satellite navigation module of Claim 13 to execute a method according to any one of claims 1 to 12.


**Revendications**

**1.** Procédé de détermination d'une position d'une unité (10) au moyen de la navigation par satellite, le procédé présentant les étapes suivantes consistant à :

- recevoir une pluralité de signaux satellite, notamment au moins
- un premier signal satellite,
- un deuxième signal satellite,
- un troisième signal satellite, et
- un quatrième signal satellite,
- effectuer une pluralité de mesures Doppler sur les signaux satellite, en même temps générer
- une première valeur Doppler sur la base du premier signal satellite,
- une deuxième valeur Doppler sur la base du deuxième signal satellite,
- une troisième valeur Doppler sur la base du troisième signal satellite, et
- une quatrième valeur Doppler sur la base du quatrième signal satellite,
- calculer la position sur la base de la première valeur Doppler, de la deuxième valeur Doppler, de la troisième valeur Doppler et de la quatrième valeur Doppler, la position étant une variable du calcul,
- dans lequel, à l'étape de réception, en outre un signal de navigation par satellite supplémentaire est reçu, et
- dans lequel le procédé présente en outre les étapes suivantes consistant à :
- effectuer une mesure du temps de propagation sur la base du signal de navigation par satellite supplémentaire, en même temps générer une valeur de temps de propagation, et
- calculer une erreur d'horloge de l'unité (10) sur la base de la position et de la valeur de temps de propagation.

**2.** Procédé selon la revendication 1,

- dans lequel tous les signaux satellite sont reçus en provenance de satellites (31, 32, 33, 34) respectivement différents.

**3.** Procédé selon l'une quelconque des revendications précédentes,

- dans lequel la position est calculée indépendamment des mesures de temps de propagation.

**4.** Procédé selon l'une quelconque des revendications précédentes,

- dans lequel, à l'étape de calcul, en outre une dérivation d'une erreur d'horloge de l'unité (10) est calculée sur la base des valeurs Doppler utilisées pour le calcul de la position, la dérivation d'une erreur d'horloge étant une variable du calcul.

**5.** Procédé selon l'une quelconque des revendications précédentes,

- qui est effectué lorsque l'unité (10) est immobilisée à la surface de la terre.

6. Procédé selon la revendication 5,

- dans lequel l'immobilisation de l'unité (10) à la surface de la terre est reconnue par odométrie.

7. Procédé selon l'une quelconque des revendications 1 à 4,

- dans lequel, à l'étape de réception, en outre
- un cinquième signal satellite,
- un sixième signal satellite, et
- un septième signal satellite

sont reçus,

- dans lequel, à l'étape d'exécution d'une pluralité de mesures Doppler, en outre
- une cinquième valeur Doppler sur la base du cinquième signal satellite,
- une sixième valeur Doppler sur la base du sixième signal satellite, et
- une septième valeur Doppler sur la base du septième signal satellite

sont générées, et

- dans lequel, à l'étape de calcul, la position est aussi calculée sur la base de la cinquième valeur Doppler, de la sixième valeur Doppler et de la septième valeur Doppler, la position et les composantes d'un vecteur de vitesse de l'unité (10) étant des variables du calcul.

8. Procédé selon la revendication 7,

- qui est effectué lorsque l'unité (10) se déplace à la surface de la terre.

9. Procédé selon l'une quelconque des revendications précédentes,

- dans lequel le calcul de la position est effectué sur la base de la formule

$$\dot{\rho}^m = \frac{[(x - x^m)(y - y^m)(z - z^m)]}{\sqrt{(x - x^m)^2 + (y - y^m)^2 + (z - z^m)^2}} \begin{bmatrix} (v_x - v_x^m) \\ (v_y - v_Y^m) \\ (v_z - v_z^m) \end{bmatrix} + c\dot{\delta t}_r$$

ou d'une linéarisation de celle-ci,
où
- m est un indice d'un satellite respectif,
- $\dot{\rho}^m$ est une valeur Doppler ou une valeur calculée à partir d'une valeur Doppler,
- x, y, z sont des composantes de la position vectorielle de l'unité,
- $x^m$, $y^m$, $z^m$ sont des composantes de la position vectorielle du satellite ayant l'indice m,
- $v_x$, $v_y$, $v_z$ sont des composantes de la vitesse vectorielle de l'unité,
- $v_x^m$, $v_y^m$, $v_z^m$ sont des composantes de la vitesse vectorielle du satellite ayant l'indice m,
- c est la vitesse de la lumière, et
- $\dot{\delta t}_r$ est une dérivation d'une erreur d'horloge de l'unité.

10. Procédé selon l'une quelconque des revendications précédentes,

- dans lequel le calcul de l'erreur d'horloge est effectué sur la base de la formule

$$\rho^m = \sqrt{(x - x^m)^2 + (y - y^m)^2 + (z - z^m)^2} + c\delta t_r$$

ou d'une linéarisation de celle-ci,

où

- m est un indice d'un satellite respectif,
- $\rho^m$ est une valeur de temps de propagation ou une valeur calculée à partir d'une valeur de temps de propagation,
- x, y, z sont des composantes de la position vectorielle de l'unité,
- $x^m$, $y^m$, $z^m$ sont des composantes de la position vectorielle du satellite ayant l'indice m,
- c est la vitesse de la lumière, et
- $\delta t_r$ est une erreur d'horloge de l'unité.

**11.** Procédé selon l'une quelconque des revendications précédentes,

- qui est effectué en utilisant un système de coordonnées géocentrique et terrestre.

**12.** Procédé selon l'une quelconque des revendications précédentes,

- dans lequel l'unité (10) est un véhicule automobile.

**13.** Module de navigation par satellite qui est configuré pour effectuer un procédé selon l'une quelconque des revendications précédentes.

**14.** Support de stockage non volatile, lisible par ordinateur, qui contient du code programme à l'exécution duquel le module de navigation par satellite selon la revendication 13 effectue un procédé selon l'une quelconque des revendications 1 à 12.

34

31

33

32

22

20

10

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003162552 A1